# EUROPÄISCHE PATENTSCHRIFT

(11) **EP 1 804 074 B1**
(45) Veröffentlichungstag und Bekanntmachung des Hinweises auf die Patenterteilung: **11.02.2009**
(21) Anmeldenummer: 06124331.7
(22) Anmeldetag: 17.11.2006
(51) Int. Cl.: G01S 7/03, G01S 7/35, G01S 13/00, G01S 13/87, G01S 13/93, G01S 7/02

(54) **Radarvorrichtung**
Radar device
Dispositif de radar

(30) Priorität: 23.12.2005 DE 102005062128
(43) Veröffentlichungstag der Anmeldung: 04.07.2007
(73) Patentinhaber: ROBERT BOSCH GMBH, 70442 Stuttgart (DE)
(72) Erfinder: Hansen, Thomas, 31139 Hildesheim (DE); Schneider, Martin, 31139 Hildesheim (DE); Schoebel, Joerg, 38226 Salzgitter (DE); Brueggemann, Oliver, 75248 Oelbronn-Duerrn (DE)

(56) Entgegenhaltungen:
- EP-A- 1 321 776
- EP-A2- 0 717 290
- WO-A-03/081278
- WO-A-20/06032569
- WO-A-20/06045668
- WO-A-20/07036396
- DE-A1- 10 049 906
- DE-A1- 10 235 338
- DE-A1- 19 714 570
- JP-A- 2000 258 524
- US-A- 5 717 399
- US-A1- 2003 222 778

## Beschreibung

Die vorliegende Erfindung betrifft eine Radarvorrichtung, insbesondere eine Radarvorrichtung zur Verwendung im Automobilbereich.

In dem Automobilwesen ist man bestrebt, Fahrassistenzfunktionen bereitzustellen, welche die Geschwindigkeit eines Fahrzeuges ansprechend auf den Verkehr regeln. Hierbei soll unter Anderem ein Fahrzeug automatisch bis zum Stillstand abgebremst werden, wenn vorausfahrende Fahrzeuge, z. B. aufgrund eines Staus, stehen bleiben. Hierzu sollen Radarvorrichtungen eingesetzt werden, die den Abstand zu anderen Fahrzeugen überwachen. Weitere Einsatzgebiete der Radarvorrichtungen sind die Überwachung von toten Winkeln, eine Einpark- oder Rückfahrhilfe und Sensorik für Personenschutzeinrichtungen in einem Fahrzeug. Derartige Radargeräte sind aus WO 2003/081278, US 2003/222778, WO 2006/045668, JP 2000-258524 oder EP 132 1776 bekannt.

Entsprechende Radarvorrichtungen benötigen eine Winkelauflösung, um vorausfahrende Fahrzeuge von seitlichen Objekten, wie z. B. Bäumen, unterscheiden zu können. Dazu erfolgt die Abstrahlung der Radarvorrichtung in mehreren sich überlappenden Abstrahlungskeulen, indem Linsen vor den Antennenelementen angeordnet werden. Allerdings benötigen diese Linsen einen Abstand von mehreren Zentimetern zu den Antennenelementen, woraus sich unerwünschterweise ein erheblicher Platzbedarf für die Radarvorrichtung ergibt.

Ein anderes Konzept ist die sogenannte digitale Strahlformung. Ein Hochfrequenzsignal wird von mehreren Antennen gleichzeitig und phasengleich emittiert. Die von Objekten reflektierten Hochfrequenzsignale werden durch die Antennen empfangen und einem Mischer zugeführt, welcher die empfangenen Signale auskoppelt. Die Laufzeitdifferenzen der reflektierten Signale zu den Antennen werden dabei als verschiedene Phasen erfasst bzw. nach dem Mischer als verschiedene Amplituden des entmischten Signals erfasst. Eine nachgeschaltete Auswertungseinrichtung bestimmt aus den Verhältnissen der Intensitäten und damit den Laufzeitdifferenzen die Richtung zu dem Objekt.

Für die automatische Steuerung eines Fahrzeuges werden zwei Bereiche unterschieden. In einem Nahbereich werden sämtliche Objekte erfasst, welche sich im Abstand von wenigen Zentimetern bis Metem um das Fahrzeug befinden. Dieser Nahbereich ist insbesondere für Einpark- und Rückfahrhilfen von Interesse. Zur Steuerung eines fahrenden Fahrzeuges ist im Gegensatz dazu ein kleiner Winkelbereich längs der Bewegungsrichtung von Interesse und seitlich zu dem Fahrzeug befindliche Objekt soll möglichst nicht erfasst werden. Zudem müssen hierbei Objekte in größerem Abstand von mehreren 10 bis 100 Metern erfasst werden, wofür eine größere Sendeleistungsdichte pro Winkeleinheit benötigt als für den Nahbereich wird

Die Sendeleistung einer Radarvorrichtung ist beschränkt. Damit die Antenneneinrichtung sowohl für die Erfassung eines Nahbereiches wie auch eines Fernbereiches verwendet werden kann, werden aufwändige Umschalteinrichtungen in der Radarvorrichtung eingesetzt, welche die Abstrahlungscharakteristik auf einen Nahbereich bzw. einen Fernbereich anpassten.

### Offenbarung der Erfindung

Ein Vorteil der erfindungsgemäßen Radarvorrichtung mit den Merkmalen des Anspruchs 1 ist, dass sie einfach und kompakt aufgebaut und zugleich parallel einen Nahbereich und Fernbereich erfassen kann.

Die erfindungsgemäße Radarvorrichtung weist folgende Elemente auf:
einen ersten lokalen Oszillator, welcher ein erstes Hochfrequenzsignal generiert,
einen zweiten lokalen Oszillator, welcher ein zweites Hochfrequenzsignal generiert,
eine Sendeeinrichtung mit wenigstens einer ersten Antenneneinrichtung, welche mit dem ersten Oszillator gekoppelt ist, um das erste Hochfrequenzsignal zu emittieren,
eine monostatische Sende- und Empfangseinrichtung mit wenigstens einer zweiten Antenneneinrichtung, welche mit dem zweiten Oszillator gekoppelt ist, um das zweite Hochfrequenzsignal zu emittieren, und welche wenigstens eine Mischeinrichtung aufweist, welche eingerichtet ist, ein mit der zweiten Antenneneinrichtung empfangenes Hochfrequenzsignal mit dem ersten Hochfrequenzsignal des ersten lokalen Oszillators zu entmischen und das entmischte Signal auszukoppeln.

Über die erste und die zweite Antenneneinrichtung wird ein erstes und ein zweites Hochfrequenzsignal abgestrahlt. Zweckmäßigerweise können die beiden Antenneneinrichtungen verschiedene Abstrahlcharakteristiken aufweisen. Hierbei kann z. B. die erste Antenneneinrichtung für einen Nahbereich eingerichtet sein, d. h. über einen großen Winkelbereich abstrahlen. Die zweite Antenneneinrichtung kann hingegen die Abstrahlungsleistung auf einen schmalen Abstrahlkegel konzentrieren und erreicht damit die Erfassung von Objekten in großer Entfernung. Die Zuordnung der ersten und zweiten Antenneneinrichtung zu dem Nahbereich bzw. Fernbereich ist rein willkürlich und kann auch umgekehrt erfolgen. Für den Empfang von den Objekten reflektierten Signalen wird nur eine einzige Empfangseinrichtung bereitgestellt. Diese ist in der monostatischen Sende- und Empfangseinrichtung integriert. Dies erspart zusätzliche Antenneneinrichtungen zum Empfangen der ersten und zweiten Hochfrequenzsignale. Für den Empfang der Hochfrequenzsignale wird eine Mischeinrichtung benötigt. Die Anzahl der Mischeinrichtungen wird dadurch reduziert, dass für die ersten Hochfrequenzsignale keine getrennte Mischeinrichtung bereitgestellt wird. Die Sendeeinrichtung weist somit keine eigene Empfangseinrichtung auf. Das entmischte Signal enthält daher sowohl ein heterodynartiges Signal wie auch ein homodynartiges Signal. Das heterodynartige Signal entsteht durch Entmischen eines empfangenen ersten Hochfrequenzsignals mit dem zweiten Hochfrequenzsignal des zweiten lokalen Oszillators. Das homodynartige Signal entsteht durch Mischen des empfangenen zweiten Hochfrequenzsignals mit dem zweiten Hochfrequenzsignal des zweiten lokalen Oszillators.

Als Hochfrequenzsignale werden die Signale bezeichnet, welche typischerweise für Radarvorrichtungen verwendet werden. Die Grundfrequenz dieser Hochfrequenzsignale liegt oberhalb von 10 GHz, eine typische Grundfrequenz beträgt 77 GHz.

Weitere Ausgestaltungen und Weiterbildungen der erfindungsgemäßen Radarvorrichtung sind in den Unteransprüchen angegeben.

Eine Ausgestaltung sieht vor, dass die Radarvorrichtung in einem Gehäuse integriert angeordnet ist.

Nach einer Ausgestaltung der vorliegenden Erfindung umfasst das empfangene Hochfrequenzsignal von der Sende- und Empfangseinrichtung emittierte und von der ersten Sendeeinrichtung emittierte Hochfrequenzsignale.

Gemäß einer Weiterbildung weist die Radarvorrichtung eine weitere Empfangsvorrichtung mit wenigstens einer dritten Antenneneinrichtung und einem der dritten Antenneneinrichtung zugehörigen Mischer auf. Der Mischer ist mit der zweiten Oszillatoreinrichtung gekoppelt. Diese zusätzliche Antenneneinrichtungen empfangen sowohl das erste Hochfrequenzsignal und das zweite Hochfrequenzsignal. Diese zusätzlichen Empfangseinrichtungen erhöhen das Signal-zu-Rauschverhältnis und die Winkeltrennfähigkeit des Systems. Ihr Aufbau ist hingegen deutlich einfacher als die Mischeinrichtung einer monostatischen Sende- und Empfangseinrichtung, da diese Mischer ein einfacher Mischer mit einer hohen Transferisolation, d. h. Isolation von empfangenen Signalen gegenüber dem lokalen Oszillator, benötigen und keinen Mischer, welcher eine Trennung von zu sendenden und empfangenen Signalen mittels eines Zirkulators, Hybrids oder eines Transfermischers benötigt.

Eine Ausgestaltung sieht vor, dass die monostatische Sende- und Empfangseinrichtung eine kleine Apertur und die Sendeeinrichtung eine große Apertur aufweist. Die große Apertur ermöglicht die Fokussierung des ersten Hochfrequenzsignals auf einen kleinen Raumwinkel während die kleine Apertur die Ausleuchtung über einen großen Raumwinkel ermöglicht.

Eine Weiterbildung der erfindungsgemäßen Radarvorrichtung sieht vor, dass die Mischereinrichtung einen Mischer aufweist, welchem das zweite Hochfrequenzsignal und das empfangene Hochfrequenzsignal zugeführt werden und ein Ausgangssignal des Mischers parallel einen Tiefpassfilter und einen Bandpassfilter zugeführt werden, um ein von der Sende- und Empfangseinrichtung emittiertes zweites Hochfrequenzsignal von einem von der ersten Sendeeinrichtung emittiertes Hochfrequenzsignal zu trennen. Die beiden getrennten Signale können dann getrennt Auswertungseinrichtungen zugeführt werden.

Eine Ausgestaltung sieht vor, dass die Oszillatoreinrichtung einen Mischer aufweist, welcher mit der zweiten Oszillatoreinrichtung und einer dritten Oszillatoreinrichtung, welche ein niederfrequentes Sinussignal ausgibt, gekoppelt ist und ein Ausgang der ersten Oszillatoreinrichtung mit einem Ausgang des Mischers verbunden ist.

Eine Ausgestaltung sieht vor, dass die Mischereinrichtung einen Transfermischer beinhaltet.

Ausführungsbeispiele der Erfindung sowie vorteilhafte Weiterbildungen sind in den Figuren der Zeichnungen schematisch dargestellt und in der nachfolgenden Beschreibung näher erläutert.

In den Figuren zeigen:
Figur 1: ein Blockdiagramm eines Ausführungsbeispieles der vorliegenden Erfindung,
Figur 2: ein Blockdiagramm eines zweiten Ausführungsbeispieles der vorliegenden Erfindung,
Figur 3: ein Blockdiagramm einer Mischeinrichtung für eines der Ausführungsbeispiele,
Figur 4: ein Blockdiagramm einer Variante der vorgenannten Ausführungsbeispiele,
Figuren 5-9: Blockdiagramme von Varianten der Mischeinrichtungen der Ausführungsbeispiele.

In den Figuren bezeichnen gleiche Bezugszeichen gleiche oder funktionsähnliche Elemente.

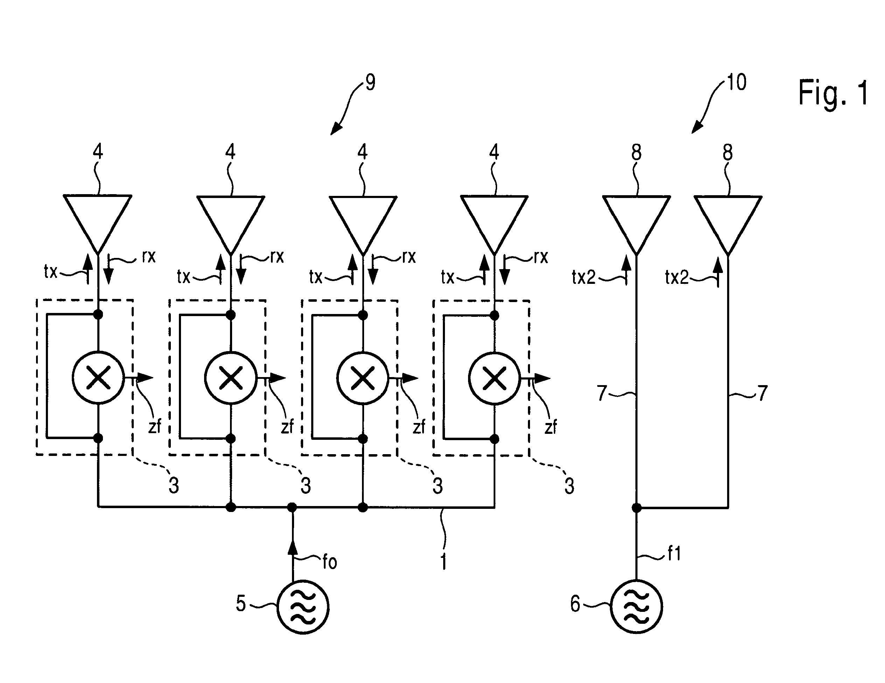

In Figur 1 ist ein Blockdiagramm eines ersten Ausführungsbeispiels der vorliegenden Erfindung dargestellt. Eine einfache Sendeeinrichtung 10 weist einen ersten lokalen Oszillator 6 auf, welcher über eine Signalleitung 7 mit einer Antenneneinrichtung 8 verbunden ist. Der erste lokale Oszillator 6 erzeugt ein Hochfrequenzsignal f1, z. B. mit einer typischen Frequenz von 77 GHz, welches dann von der Antenneneinrichtung 8 als gesendetes Hochfrequenzsignal tx2 emittiert wird. Die Antenneneinrichtung kann eine Mehrzahl von Antennen aufweisen. Die Antennen können z. B. als Patch-Antennen oder Leitbahnen auf einem Substratträger gebildet sein. Diese beschriebene Sendeeinrichtung 10 weist keine Elemente zum Empfang von Hochfrequenzsignalen auf, welche durch Reflektion des emittierten Hochfrequenzsignals tx2 entstehen.

Neben der beschriebenen Sendeeinrichtung 10 ist eine monostatische Sende- und Empfangseinrichtung 9 angeordnet. Diese weist einen zweiten lokalen Oszillator 5 auf, welcher ein zweites Hochfrequenzsignal f0 generiert. Die Grundfrequenz dieses Hochfrequenzsignals kann im Bereich von 77 GHz oder höher liegen. Das zweite Hochfrequenzsignal f0 wird über Signalleitungen einer Mehrzahl von Antenneneinrichtungen 4 zugeführt. Die monostatische Sende- und Empfangseinrichtung 1 ist auch zum Empfangen der reflektierten Hochfrequenzsignale rx eingerichtet. Dazu sind zwischen dem lokalen Oszillator 5 und den Antenneneinrichtungen 4 Mischeinrichtungen 3 angeordnet, welche gesendete Hochfrequenzsignale tx von empfangenen Hochfrequenzsignalen rx trennen. Das empfangene Hochfrequenzsignal rx wird mit dem ersten Hochfrequenzsignal f0 des zweiten lokalen Oszillators 5 gemischt. Das sich dabei ergebende Zwischenfrequenzsignal zf wird einer Auswertungseinrichtung (nicht dargestellt) zugeführt.

Die Auswertungseinrichtung empfängt die Zwischenfrequenzsignale zf der einzelnen Mischeinrichtungen 3. Aus der relativen Phase der Zwischenfrequenzsignale zf zueinander bestimmt die Auswertungseinrichtung die Orientierung eines Objektes bezüglich der Antenneneinrichtungen 4. Die Bestimmung basiert auf den Laufunterschieden der reflektierten Hochfrequenz-Signale tx von dem Objekt bis zu den Antenneneinrichtungen 4.

Die Anzahl der ersten Antenneneinrichtungen 8 und der zweiten Antenneneinrichtungen 4 der Sendeeinrichtung 10 bzw. der monostatischen Sende- und Empfangseinrichtung 9 sind rein willkürlich. Eine Antenneneinrichtung 4 kann aus einer Mehrzahl von Antennen bestehen, welche gemeinsam mit einer Mischeinrichtung 3 verbunden sind. Hierbei können z. B. vertikal übereinander angeordnete Antennen in Serie miteinander verbunden werden, wenn keine Winkelauflösung entlang der Vertikalen benötigt wird, wie dies z. B. für Fahrzeuge der Fall ist. Eine bevorzugte Realisierung dieser Antenneneinrichtungen sind Patch-Antennen, welche z. B. auf einer Leiterplatte als Leiterbahnen realisiert sind.

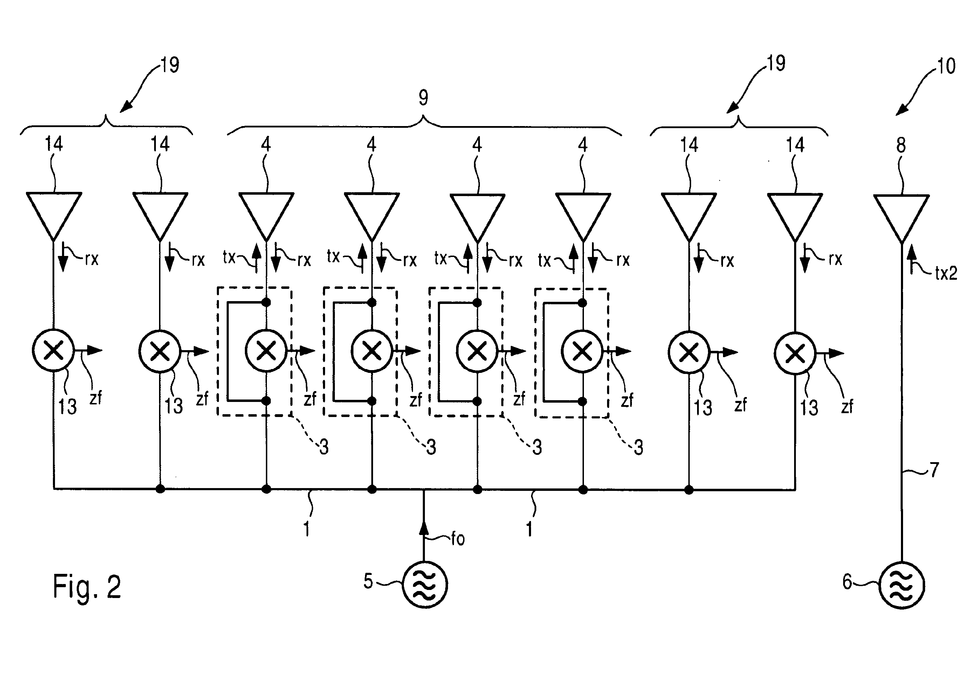

In Figur 2 ist ein zweites Ausführungsbeispiel der vorliegenden Erfindung dargestellt. Zusätzlich zu dem ersten Ausführungsbeispiel sind weitere Empfangseinrichtungen 19 mit dem zweiten lokalen Oszillator 5 verbunden. Diese weisen eine Antenneneinrichtung 14 und einen zugehörigen Mischer 13 auf. Der Mischer 13 ist ein einfacher Mischer mit vorzugsweise hoher Transferisolation zwischen dem zweiten lokalen Oszillator 5 und der empfangenden Antenneneinrichtung 14. Eine Weiterleitung des zweiten Hochfrequenzsignals von dem zweiten lokalen Oszillator 5 an die Antenneneinrichtung ist im Gegensatz zu dem monostatischen Sende- und Empfangsbereich 9 nicht erforderlich. Somit können diese Mischeinrichtungen 13 platzsparender und kostengünstiger hergestellt werden. Die zusätzlichen Empfangseinrichtungen können bereitgestellt werden, um einen größeren Anteil der reflektierten Hochfrequenzsignale zu empfangen und somit die Effizienz und Winkeltrennfähigkeit der Radarvorrichtung zu verbessern.

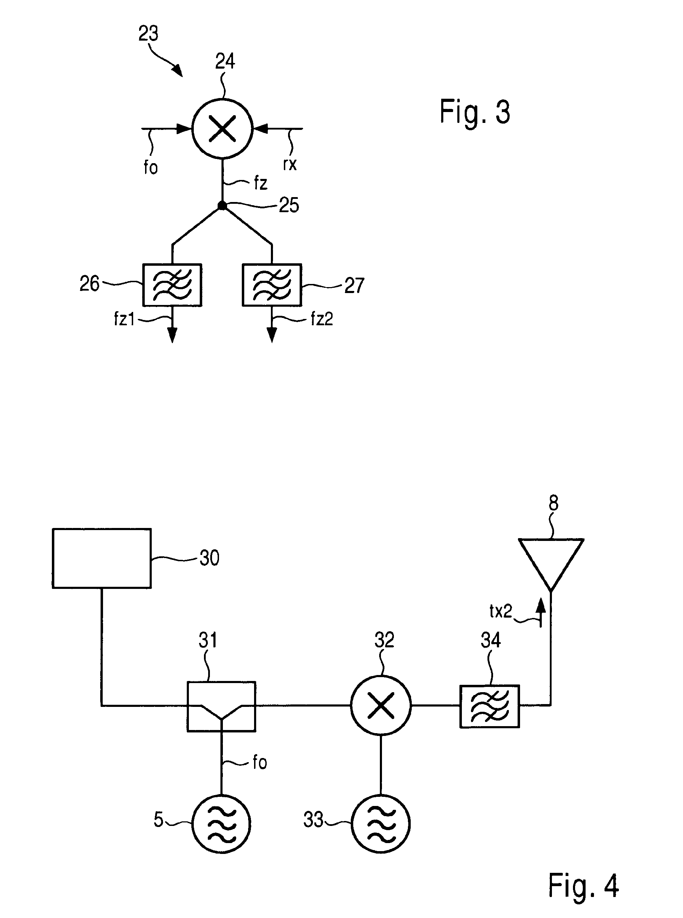

In Figur 3 ist in einem Blockdiagramm eine Mischeinrichtung 23 mit einem Mischer 24 dargestellt, die eine mögliche Ausführung für die Signaltrennung im Zwischenfrequenzbereich in einem der beschriebenen Ausführungsbeispiele ist. Der Mischer 24 ist vorzugsweise ein isolierender Mischer, kann aber auch ein nicht isolierender Mischer sein. Dem Mischer 24 wird das zweite Hochfrequenzsignal des lokalen Oszillators f0 und ein empfangenes Hochfrequenzsignal rx von der Antenneneinrichtung 4 zugeführt. Das empfangene Hochfrequenzsignal weist Anteile des ersten Hochfrequenzsignals f1 von der Sendeeinrichtung 10 und Anteile der zweiten Hochfrequenzsignale f0 der monostatischen Sende-und Empfangseinrichtung 9 auf. Diese beiden Signalanteile müssen voneinander getrennt werden. Bei der Mischung der beiden Signalanteile mit dem zweiten Hochfrequenzsignal f0 enthält das entmischte Signal oder Zwischenfrequenzsignal zf einen niederfrequenten Anteil um 0 Hz, welcher sich durch eine homodyne Entmischung der empfangenen Signale der monostatischen Sende- und Empfangseinrichtung mit dem zweiten Hochfrequenzsignal ergibt, und einen niederfrequenten Anteil auf, welcher sich durch eine heterodyne Entmischung der empfangenen Hochfrequenzsignale der reinen Sendeeinrichtung mit dem zweiten Hochfrequenzsignal f0 ergibt. Über einen Leistungsteiler 25 werden die beiden Signale einem Tiefpassfilter 26 und einem Bandpassfilter 27 zugeführt. Die Kennlinien der beiden Filter sind derart eingestellt, dass sie nur jeweils einen Anteil des Zwischenfrequenzsignals zf passieren lassen.

In Figur 4 ist eine Variante zur Generierung des ersten Hochfrequenzsignals f1 aus dem zweiten Hochfrequenzsignal f0 dargestellt. Dem zweiten lokalen Oszillator 5 ist ein Leistungsteiler 31 nachgeschaltet. Ein Leistungsanteil wird der monostatischen Sende- und Empfangseinrichtung 30 zugeführt. Ein zweiter Anteil wird einem Mischer 32 zusammen mit einem niederfrequenten Sinussignal aus einem dritten lokalen Oszillator 33 zugeführt. Das gemischte Signal kann optional einen Bandpassfilter 34 durchlaufen, um ein unerwünschtes Mischprodukt des Mischers 32 zu entfernen. Das andere Mischprodukt wird als erstes Hochfrequenzsignal der Antenneneinrichtung 8 zugeführt. Der Vorteil dieser Anordnung liegt darin, dass der dritte lokale Oszillator 33 ein niederfrequenter Festfrequenzoszillator sein kann. Die zeitliche Variation des zweiten Hochfrequenzsignals f0 wird synchron auf das erste Hochfrequenzsignal übertragen. Entsprechende Variationen des Hochfrequenzsignals f0 sind für FMCW-Radars bekannt.

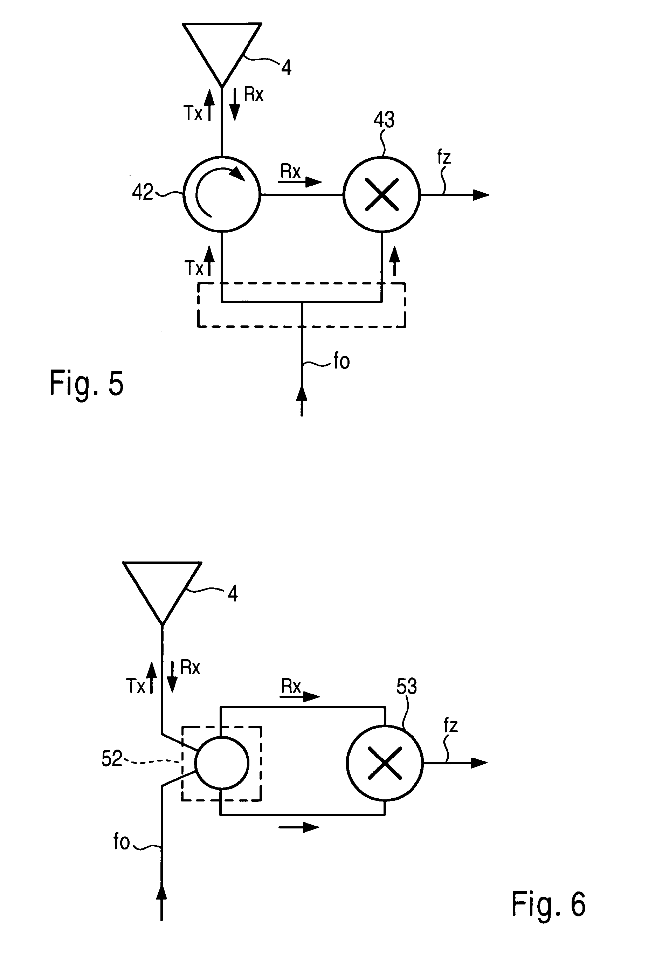

In den Figuren 5 bis 9 sind exemplarisch Mischer gezeigt, welche für die Mischeinrichtung 3 verwendet werden können. Diese sind geeignet, um ein Hochfrequenzsignal in eine Antenneneinrichtung einzuspeisen und ein empfangenes Signal von der Antenneneinrichtung auszukoppeln. Figur 5 zeigt einen Zirkulator 42, welcher zwischen der Antenneneinrichtung und dem lokalen Oszillator angeordnet wird. Ein dritter Ausgang des Zirkulators 42 ist mit einem Mischer 43 verbunden, welcher als zweites Eingangssignal das Hochfrequenzsignal f0 des lokalen Oszillators empfängt. Figur 6 zeigt einen Aufbau, welcher anstelle des Zirkulators einen Koppler 52 verwendet.

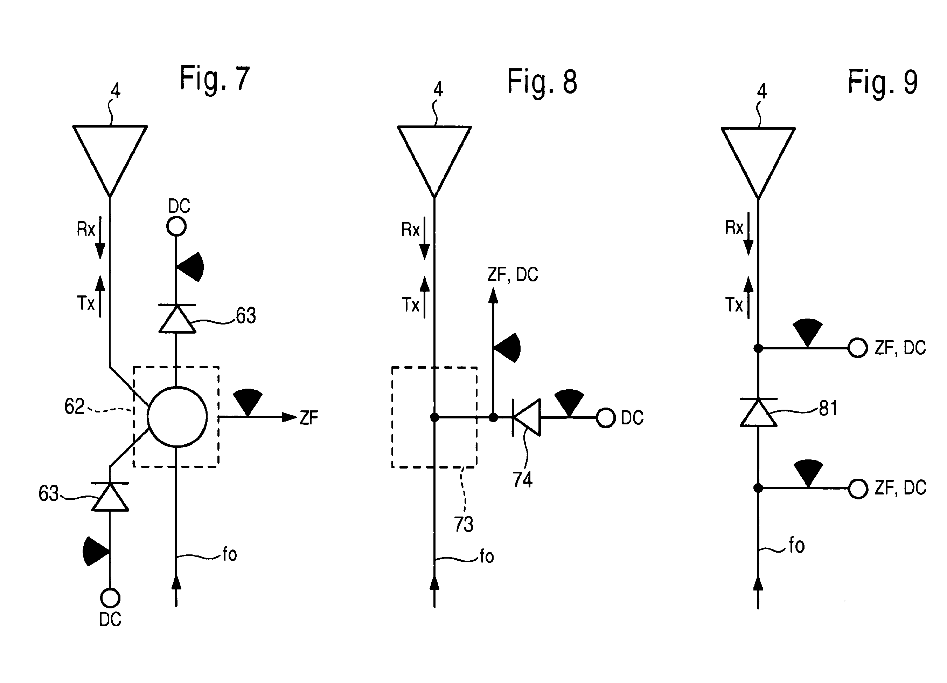

Figur 7 zeigt einen sogenannten Transfermischer, welcher die Nichtlinearität einer Diode 63 zum Entmischen des empfangenen Hochfrequenzsignals rx mit dem Hochfrequenzsignal f0 des lokalen Oszillators verwendet. Die Anbindung der Diode 63 an die Antenneneinrichtung 4 und an den lokalen Oszillator erfolgt über einen Koppler 62. Ein vereinfachter Aufbau mit einer t-förmigen Anbindung der Diode 74 an den lokalen Oszillator und die Antenneneinrichtung 4 ist in Figur 8 dargestellt. Figur 9 zeigt einen Transfermischer mit einer Diode 81, welche in Serie zwischen die Antenneneinrichtung 4 und den lokalen Oszillator geschaltet ist, ein solcher Aufbau ist unter Anderem aus der Offenlegungsschrift DE 102 35 338 A1 bekannt.

Obwohl die vorliegende Erfindung anhand bevorzugter Ausführungsbeispiele beschrieben wurde, ist sie nicht darauf beschränkt, sondern in vielfältiger Weise abwandelbar. Insbesondere ist die räumliche Anordnung der einzelnen Antennen und Antenneneinrichtungen nicht wie in den Zeichnungen seitlich versetzt zueinander vorgegeben, sondern die Antennen können in vielfältiger Weise durchmischt angeordnet sein.

**Bezugszeichenliste**

| | |
|---|---|
| f1, f0 | erstes, zweites Hochfrequenzsignal |
| fz1, fz2 | erstes, zweites entmischtes Signal |
| rx | empfanges Hochfrequenzsignal |
| tx, tx2 | gesendetes erstes, zweites Hochfrequenzsignal |
| zf | entmischtes Signal |
| 1 | Signalleitung |
| 3 | Mischeinrichtung |
| 4 | erste Antenneneinrichtung |
| 5 | zweiter lokaler Oszillator |
| 6 | erster lokaler Oszillator |
| 7 | Signalleitung |
| 8 | zweite Antenneneinrichtung |
| 9 | monostatische Sende- und Empfangseinrichtung |
| 10 | S endeeinrichtung |
| 13 | Mischeinrichtung |
| 14 | dritte Antenneneinrichtung |
| 23 | Mischeinrichtung |
| 24 | Mischer |
| 25 | Leistungsteiler |
| 26 | Tiefpassfilter |
| 27 | Bandpassfilter |
| 30 | monostatische Sende- und Empfangseinrichtung |
| 31 | Leistungsteiler |
| 32 | Mischer |
| 33 | dritter lokaler Oszillator |
| 34 | Bandpass |
| 42 | Zirkulator |
| 43, 53 | Mischer |
| 52, 52 | Koppler |
| 63, 74, 81 | Diode |
| 73 | T-förmige Verzweigung |

## Patentansprüche

1. Radarvorrichtung zur Verwendung im Automobilbereich, aufweisend,
- eine Sendeeinrichtung (10),
o wobei die Sendeeinrichtung (1) einen ersten lokalen Oszillator (6) zur Erzeugung eines ersten Hochfrequenzsignals (tx2) sowie wenigstens eine erste Antenneneinrichtung (8) umfasst,
o wobei das erste Hochfrequenzsignal (tx2) über die wenigstens erste Antenneneinrichtung (8) emittiert wird,
- eine monostatische Sende- und Empfangseinrichtung (9),
o wobei die monostatische Sende- und Empfangseinrichtung (9) einen zweiten lokalen Oszillator (5) zur Erzeugung eines zweiten Hochfrequenzsignals (tx) sowie zweite Antenneneinrichtungen (4) umfasst,
o wobei zwischen dem zweiten Oszillator (5) und den zweiten Antenneneinrichtungen (4) erste Mischeinrichtungen (3) angeordnet sind,
o wobei das zweite Hochfrequenzsignal (tx) über die ersten Mischeinrichtungen (3) den zweiten Antenneneinrichtungen (4) zugeführt wird und die zweiten Antenneneinrichtungen (4) das zweite Hochfrequenzsignal (tx) emittieren,
o wobei die ersten Mischeinrichtungen (3) das zu sendende zweite Hochfrequenzsignal (tx), von durch die zweiten Antenneneinrichtungen (4) ersten empfangenen Hochfrequenzsignalen (rx) trennen,
o wobei die ersten Mischeinrichtungen (3) die ersten empfangenen Hochfrequenzsignale (rx) mit den zweiten Hochfrequenzsignalen (tx) des zweiten lokalen Oszillators (5) mischen und die sich ergebenden ersten Zwischenfrequenzsignale (zf) einer Auswerteeinrichtung zuführen,
o wobei das erste empfange Hochfrequenzsignal (rx) das von der ersten Sendeeinrichtung (10) emittierte Hochfrequenzsignal (tx2) und das von der monostatischen Sende- und Empfangseinrichtung (9) emittierte zweite Hochfrequenzsignal (tx) umfasst
- wobei die wenigstens erste Antenneneinrichtung (8) eine erste Abstrahlcharakteristik für einen Nahbereich aufweist und die zweiten Antenneneinrichtungen (4) eine zweite Abstrahlcharakteristik für einen Fernbereich aufweisen,
**dadurch gekennzeichnet, dass** die Radarvorrichtung ferner
- weitere Empfangseinrichtungen (19) aufweist,
o wobei die Empfangseinrichtungen (19) dritte Antenneneinrichtungen (14) umfassen, welche zweite empfangene Hochfrequenzsignale (rx) zweiten Mischeinrichtungen 13) zuführen,
o wobei das zweite empfangene Hochfrequenzsignal (rx) das von der ersten Sendeeinrichtung (10) emittierte Hochfrequenzsignal (tx2) und das von der monostatischen Sende- und Empfangseinrichtung (9) emittierte zweite Hochfrequenzsignal (tx) umfasst
o wobei an den zweiten Mischeinrichtungen (13) das zweite Hochfrequenzsignal (tx) des zweiten lokalen Oszillators (5) anliegt,
o wobei an die zweiten Antenneneinrichtungen (14) keine Weiterleitung des zweiten Hochfrequenzsignals (tx) des zweiten lokalen Oszillators (5) erfolgt,
o wobei es sich bei den zweiten Mischeinrichtungen (13) um Mischer mit einer hohen Transferisolation zwischen dem zweiten lokalen Oszillator (5) und den dritten Antenneneinrichtungen (14) handelt
o wobei die zweiten Mischeinrichtungen anhand der zweiten empfangenen Hochfrequenzsignale (rx) und des zweiten Hochfrequenzsignals (tx) des zweiten lokalen Oszillators (5) zweite Zwischenfrequenzsignale (zf) erzeugen.

2. Radarvorrichtung nach Anspruch 1,
**dadurch gekennzeichnet, dass** der erste lokale Oszillator (6) ein niederfrequenter Frequenzoszillator ist, dessen Signal über einen Mischer (32) mit dem zweiten Hochfrequenzsignal (tx) des zweiten lokalen Oszillators (5) zur Erzeugung des ersten Hochfrequenzsignals (tx) gemischt wird.

## Claims

1. Radar device for use in the field of automobiles, having:
- a transmitting device (10),
o wherein the transmitting device (1) comprises a first local oscillator (6) for generating a first radio frequency signal (tx2) and at least a first antenna device (8),
o wherein the first radio frequency signal (tx2) is emitted via the at least first antenna device (8),
- a monostatic transceiver device (9),
o wherein the monostatic transceiver device (9) comprises a second local oscillator (5) for generating a second radio frequency signal (tx) and second antenna devices (4),
o wherein first mixing devices (3) are arranged between the second oscillator (5) and the second antenna devices (4),
o wherein the second radio frequency signal (tx) is fed to the second antenna devices (4) via the first mixing devices (3), and the second antenna devices (4) emit the second radio frequency signal (tx),
o wherein the first mixing devices (3) separate the second radio frequency signal (tx) to be transmitted from first radio frequency signals (rx) which are received by the second antenna devices (4),
o wherein the first mixing devices (3) mix the first received radio frequency signals (rx) with the second radio frequency signals (tx) of the second local oscillator (5) and feed the resulting first intermediate frequency signals (zf) to an evaluation device,
o wherein the first received radio frequency signal (rx) comprises the radio frequency signal (tx2) which is emitted by the first transmitting device (10), and the second radio frequency signal (tx) which is emitted by the monostatic transceiver device (9),
- wherein the at least first antenna device (8) has a first irradiation characteristic for a close range, and the second antenna devices (4) have a second irradiation characteristic for a long range,
**characterized in that** the radar device also has
- further receiving devices (19),
o wherein the receiving devices (19) comprise third antenna devices (14) which feed second received radio frequency signals (rx) to second mixing devices (13),
o wherein the second received radio frequency signal (rx) comprises the radio frequency signal (tx2) which is emitted by the first transmitting device (10), and the second radio frequency signal (tx) which is emitted by the monostatic transceiver device (9),
o wherein the second radio frequency signal (tx) of the second local oscillator (5) is present at the second mixing devices (13),
o wherein the second radio frequency signal (tx) of the second local oscillator (5) is not passed on to the second antenna devices (14),
o wherein the second mixing devices (13) are mixers with a high level of transfer insulation between the second local oscillator (5) and the third antenna devices (14),
o wherein the second mixing devices generate second intermediate frequency signals (zf) on the basis of the second received radio frequency signals (rx) and of the second radio frequency signal (tx) of the second- local oscillator (5).

2. Radar device according to Claim 1, **characterized in that** the first local oscillator (6) is a low-frequency oscillator whose signal is mixed with the second radio frequency signal (tx) of the second local oscillator (5) by means of a mixer (32) in order to generate the first radio frequency signal (tx).

## Revendications

1. Dispositif de radar destiné au domaine automobile comprenant :
- une installation d'émission (10),
* l'installation d'émission (10) comportant un premier oscillateur local (6) pour générer un premier signal haute fréquence (tx2) ainsi qu'au moins une première installation d'antenne (8),
* le premier signal haute fréquence (tx2) étant émis au moins par la première installation d'antenne (8),
- une installation d'émission et de réception (9) monostatique,
* l'installation d'émission et de réception (9) monostatique ayant un second oscillateur local (5) pour générer un second signal haute fréquence (tx) ainsi que des secondes installations d'antenne (4),
* des premières installations de mélange (3) étant situées entre le second oscillateur (5) et les secondes installations d'antenne (4),
* le second signal haute fréquence (tx) étant appliqué par l'intermédiaire des premières installations de mélange (3) aux secondes installations d'antenne (4), et les secondes installations d'antenne (4) émettent le second signal haute fréquence (tx),
* les premières installations de mélange (3) séparant le second signal haute fréquence (tx) à émettre par rapport aux premiers signaux haute fréquence (rx), reçus par les secondes installations d'antenne (4),
* les premières installations de mélange (3) mélangeant les premiers signaux haute fréquence reçus (rx) avec les seconde signaux haute fréquence (tx) du second oscillateur local (5), et appliquant les premiers signaux de fréquence intermédiaire (zf) obtenus à une installation d'exploitation,
* le premier signal haute fréquence reçu (rx) comprenant le premier signal haute fréquence (tx2) émis par la première installation d'émission (10), et le second signal haute fréquence (tx) émis par l'installation d'émission et de réception monostatique (9),
- au moins la première installation d'antenne (8) présente une première caractéristique de rayonnement pour un domaine proche et les secondes installations d'antenne (4) présentent une seconde caractéristique de rayonnement pour une zone éloignée,
**caractérisé en ce que**
le dispositif radar comprend en outre d'autres installations de réception (19),
* les installations de réception (19) comprenant les troisièmes installations d'antenne (14) qui appliquent les seconds signaux haute fréquence reçus (rx) aux secondes installations de mélange (13),
* le second signal haute fréquence (rx), reçu, comprend le signal haute fréquence (tx2) émis par la première installation d'émission (10), et le second signal haute fréquence (tx) émis par l'installation d'émission et de réception (9) monostatique,
* les secondes installations de mélange (13) recevant le second signal haute fréquence (tx) du second oscillateur local (5),
* les secondes installations d'antenne (14) ne transmettant pas le second signal haute fréquence (tx) du second oscillateur local (5),
* les secondes installations de mélange (13) ayant un mélangeur avec une isolation de transfert élevée entre le second oscillateur local (5) et les troisièmes installations d'antenne (14),
* les secondes installations de mélange générant des seconds signaux de fréquence intermédiaire (zf) à partir des seconds signaux haute fréquence reçus (rx), et du second signal haute fréquence (tx) du second oscillateur local (5).

2. Dispositif de radar selon la revendication 1,
**caractérisé en ce que**
le premier oscillateur local (6) est un oscillateur basse fréquence dont le signal est mélangé par un mélangeur (32) au second signal haute fréquence (tx) du second oscillateur local (5) pour générer le premier signal haute fréquence (tx).
